# EUROPÄISCHE PATENTSCHRIFT

(11) **EP 4 542 073 B1**
(45) Veröffentlichungstag und Bekanntmachung des Hinweises auf die Patenterteilung: **03.06.2026**
(21) Anmeldenummer: 24205647.1
(22) Anmeldetag: 09.10.2024
(51) Int. Cl.: F16D 27/09, F16D 27/118

(54) **ELEKTROMAGNETISCH BETÄTIGTE KLAUENKUPPLUNG UND VERFAHREN ZUR MONTAGE EINER SCHALTMUFFE EINER ELEKTROMAGNETISCH BETÄTIGTEN KLAUENKUPPLUNG**
ELECTROMAGNETICALLY ACTUATED CLAW COUPLING AND METHOD FOR ASSEMBLING A SHIFT SLEEVE OF AN ELECTROMAGNETICALLY ACTUATED CLAW COUPLING
EMBRAYAGE À CRABOTS À ACTIONNEMENT ÉLECTROMAGNÉTIQUE ET PROCÉDÉ DE MONTAGE D'UN MANCHON DE COMMANDE D'UN EMBRAYAGE À CRABOT À ACTIONNEMENT ÉLECTROMAGNÉTIQUE

(30) Priorität: 17.10.2023 DE 102023128458
(43) Veröffentlichungstag der Anmeldung: 23.04.2025
(73) Patentinhaber: HOERBIGER Antriebstechnik Holding GmbH, 86956 Schongau (DE)
(72) Erfinder: BINDER, Jürgen, 86956 Schongau (DE); ECHTLER, Peter, 86956 Schongau (DE); DEMPFLE, Andreas, 86956 Schongau (DE); FÜRGUTH, Werner, 86956 Schongau (DE); VOELK, Wolfgang, 86956 Schongau (DE); BUTORIN, Oleg, 86956 Schongau (DE); KUCHAREK, Sebastian, 86956 Schongau (DE)
(74) Vertreter: Prinz & Partner mbB

(56) Entgegenhaltungen:
- US-A1- 2009 127 059
- US-A1- 2017 002 875
- US-A1- 2024 352 979
- US-B1- 9 396 860

## Beschreibung

Die Erfindung betrifft eine elektromagnetisch betätigte Klauenkupplung mit einer Schaltmuffe sowie ein Verfahren zur Montage einer Schaltmuffe einer elektromagnetisch betätigten Klauenkupplung auf einer Getriebewelle.

Bei elektromagnetisch betätigten Klauenkupplungen wird in der Regel die Schaltmuffe elektromagnetisch durch ein von einer Spule erzeugtes Magnetfeld in eine der beiden Schaltstellungen gezogen und ist in die andere Schaltstellung durch eine Feder beaufschlagt. Die Feder muss daher innerhalb der Kupplungsbaugruppe positioniert und gegen die Reaktionskräfte abgestützt sein.

In der US 9 396 860 B1 und der US 2017 / 0002875 A1 sind elektromagnetisch betätigte Klauenkupplungen gezeigt, bei denen eine Magnetspule auf eine Schaltmuffe wirkt und diese auf einer Getriebewelle zwischen zwei Schaltstellungen verschiebt. Ein Stützring auf der Getriebewelle bildet einen Anschlag für ein Federelement, das eine Rückstellkraft aufbringt, wobei das Federelement in einer Aufnahme der Schaltmuffe angeordnet ist.

Aufgabe der Erfindung ist es, den benötigten Bauraum für eine elektromagnetisch betätigte Klauenkupplung insbesondere in Radialrichtung bei einer einfachen Montage zu verringern.

Diese Aufgabe wird durch eine elektromagnetisch betätigte Klauenkupplung mit den Merkmalen des Anspruchs 1 gelöst.

Da der Stützring direkt auf der Getriebewelle fixiert ist, resultiert eine radial sehr kompakte Baugruppe, welche z.B. durch einfaches axiales Aufpressen auf die Getriebewelle montiert werden kann.

Die Außenverzahnung der Getriebewelle ist beispielsweise an einem drehfest mit der Getriebewelle verbundenen, bekannten Kupplungskörper ausgebildet, an den axial angrenzend ein Losrad mit einer zu kuppelnden Außenverzahnung angeordnet ist. Das Losrad und die Getriebewelle sind durch einen Eingriff der Innenverzahnung der Schaltmuffe in deren Außenverzahnungen drehfest verbindbar, um den jeweiligen Gang zu schalten.

Vorzugsweise ist die Klauenkupplung als normal offene Kupplung gestaltet, sodass die erste Schaltstellung einer geschlossenen Stellung und die zweite Schaltstellung einer offenen Stellung der Klauenkupplung entspricht. Das Prinzip der Erfindung kann jedoch auch mit einer normal geschlossenen Klauenkupplung verwirklicht werden.

Der Stützring weist eine Abstützfläche für das Federelement entgegen der von der Schaltmuffe übertragenen Kraft auf und bildet eine in Axialrichtung weisende Reaktionsfläche für das Federelement.

Der Stützring ist beispielsweise ein axial starrer Metallring und ist stets ein von der Getriebewelle und deren Außenverzahnung separates Bauteil. Vorzugsweise weist der Stützring in Radialrichtung eine ausreichende Elastizität auf, um auf die Außenverzahnung der Getriebewelle aufgeschoben zu werden. Generell kann der Stützring aus einem Federmaterial bestehen, um eine plastische Verformung so weit wie möglich zu verhindern.

Das Federelement besteht beispielsweise aus mehreren Tellerfedern, die axial nebeneinander auf der Außenverzahnung der Getriebewelle angeordnet sind.

In einer bevorzugten Variante ist die Schaltmuffe aus mehreren, fest miteinander verbundenen Bauteilen zusammengesetzt. Die Schaltmuffe weist einen Eingriffsring auf, an dem die Innenverzahnung ausgebildet ist, und einen fest mit dem Eingriffsring verbundenen Schaltring, der mit dem Aktor zusammenwirkt, wobei der Schaltring radial außerhalb des Eingriffsrings und der Stützring axial neben dem Eingriffsring angeordnet ist. Auf diese Weise lassen sich das Federelement und der Stützring einfach in eine vorgefertigte Baugruppe zur Montage der Schaltmuffe integrieren. Außerdem ist so z.B. einfach eine Schaltmuffe aus mehreren unterschiedlichen Materialien, etwa mit unterschiedlichen magnetischen und mechanischen Eigenschaften, realisierbar.

Insbesondere der Schaltring sollte aus einem ferromagnetischen Material bestehen, um durch den Aktor verschiebbar zu sein. In einer bevorzugten Variante wird durch das Magnetfeld des Aktors eine Reluktanzkraft im Schaltring erzeugt, die die Schaltmuffe näher zum Aktor zieht, um die Induktivität im Magnetkreis zu maximieren.

Die Schaltmuffe weist eine Aufnahme für den Stützring und das Federelement auf. Der Schaltring erstreckt sich hierzu axial über den Stützring und das Federelement, ist also radial außerhalb des Stützrings und des Federelements angeordnet. Außerdem weist der Stützring einen seitlichen Axialanschlag für das Federelement auf, der das Federelement mit der Schaltmuffe koppelt und eine Federkraft des Federelements auf die Schaltmuffe überträgt. Das Federelement ist vorzugsweise zwischen dem Axialanschlag und dem Stützring angeordnet und axial zwischen diesen Bauteilen aufgespannt.

Der Stützring kann radial kürzer als der Eingriffsring und vom Schaltring radial beabstandet sein. Auf diese Weise lässt sich ein Magnetfluss vom Schaltring zum Stützring reduzieren. Da der Stützring nicht zur Schaltkraft beiträgt, ist er vorzugsweise aus einem nicht ferromagnetischen Material gefertigt.

Die Innenverzahnung der Schaltmuffe weist beispielsweise mehrere radiale Anschlagsvorsprünge auf, die jeweils mit einer Anschlagsnut in der Außenverzahnung der Getriebewelle zusammenwirken und die eine Endposition der Schaltmuffe in der zweiten Schaltstellung der Klauenkupplung definieren. Beispielsweise weisen einige der Zähne der Innenverzahnung jeweils einen radialen Vorsprung auf, der axial so positioniert ist, dass er am axialen Ende der zugeordneten Anschlagnut anliegt, wenn sich die Schaltmuffe in der zweiten Schaltstellung befindet.

Um den Schaltweg in die erste Schaltstellung zu begrenzen und somit die erste Schaltstellung zu definieren, können die Anschlagsvorsprünge verwendet werden, die in der ersten Schaltstellung in Kontakt mit einer Stirnseite eines Losrads sind.

Es ist möglich, eine Magnetspule des Aktors mit einem ringförmigen Aktorgehäuse zu umgeben, das zusammen mit dem Schaltring den Magnetkreis des Aktors bildet.

Der Stützring weist vorzugsweise eine Anlagefläche für die Schaltmuffe auf, an der geometrische Strukturen ausgebildet sind, die einen Kontakt zwischen Schaltmuffe und Stützring reduzieren. Die Strukturen sollten dazu ausgelegt sein, adhäsive Kräfte zum Beispiel durch einen Ölfilm und/oder durch magnetische Kräfte zwischen dem Stützring und der Schaltmuffe zu verringern. Beispielsweise kann der Stützring im Schnitt in Axialrichtung eine L-Form oder entlang der Radial- und/oder Umfangsrichtung verteilte Vorsprünge aufweisen. Die Fläche der Schaltmuffe, die in Kontakt mit der Anlagefläche kommt, ist beispielsweise eine Seitenfläche des Eingriffsrings.

Die oben genannte Aufgabe wird auch mit einem Verfahren zur Montage einer Schaltmuffe einer elektromagnetisch betätigten Klauenkupplung auf einer Getriebewelle mit den Merkmalen des Anspruchs 5 gelöst.

Zur Fertigung der Baugruppe können der Eingriffsring, der Stützring und das Federelement axial aufgereiht werden, bevor der Schaltring radial darüber gelegt und mit dem Eingriffsring verschweißt wird. Auf diese Weise werden gleichzeitig die Aufnahme gebildet und der Stützring und das Federelement in der Aufnahme angeordnet. Der Stützring und das Federelement lassen sich so einfach an der Schaltmuffe vormontieren, sodass sie als ein einziges Bauteil zusammen gehandhabt werden können. Diese Baugruppe muss nur noch bis zur gewünschten axialen Position auf die Außenverzahnung der Getriebewelle aufgeschoben werden. Anfänglich befindet sich der Stützring normalerweise in Anlage an einer Seitenfläche des Eingriffsrings und wird von dieser auf die Getriebewelle geschoben.

Die radialen Anschlagsvorsprünge und Anschlagnuten, die oben erwähnt wurden, können die vorgegebene Endposition für den Stützring definieren. Beim Aufschieben der Baugruppe auf die Außenverzahnung der Getriebewelle endet die Verschiebebewegung, wenn die Anschlagsvorsprünge in Anlage an das axiale Ende der Anschlagsnuten kommen. Der Stützring gelangt somit ohne weiteres Zutun in seine korrekte axiale Position auf der Getriebewelle. Damit werden auch Toleranzen in der Baugruppe automatisch ausgeglichen.

In der vorgegebenen Endposition wird der Stützring vorzugsweise ohne weitere Arbeitsschritte automatisch auf der Getriebewelle axial fixiert.

Um den Stützring auf der Getriebewelle zu fixieren, kann dieser ausschließlich durch Reibungskräfte an der Getriebewelle in der vorgegebenen Endposition gehalten werden. Hierzu wird insbesondere ein geschlossener Stützring verwendet. Dies hat den Vorteil, dass der Stützring keine Unwucht erzeugt. Diese Variante ist somit vor allem für hohe Drehzahlen geeignet.

Das Aufschieben des Stützrings auf die Getriebewelle erfolgt mit einer höheren Axialkraft als sie der Aktor beim Schalten der Klauenkupplung aufbringt, sodass im normalen Betrieb der Kupplung der Stützring nicht verschoben werden kann.

Gegebenenfalls kann das Aufschieben durch eine Wärmeeinwirkung unterstützt werden, die zu einer temporären radialen Ausdehnung des Stützrings führt, sodass dieser sich auf der Getriebewelle an die vorgegebene Endposition verschieben lässt. Beim Abkühlen zieht sich der Stützring wieder zusammen und ist so fest auf der Getriebewelle geklemmt.

In einer anderen Variante wird der Stützring auf der Getriebewelle fixiert, indem der Stützring in der vorgegebenen Endposition in eine Radialnut in der Außenverzahnung der Getriebewelle eingreift. In diesem Fall ist der Stützring geschlitzt, sodass er sich ausreichend radial aufweiten kann, um bis zum Erreichen der Radialnut über die Getriebewelle geschoben zu werden. Diese Variante eignet sich vor allem für kleine Drehzahlen.

Um das Montieren der Baugruppe und vor allem das Aufschieben des Stützrings auf die Getriebewelle zu vereinfachen, wird der Stützring vorzugsweise auf eine Fase an einem axialen Ende der Außenverzahnung der Getriebewelle aufgeschoben und dabei radial aufgeweitet. Die Fase kann an den axialen Enden der Zähne der Außenverzahnung der Getriebewelle ausgebildet sein. Durch diese Fase wird gleichzeitig der Stützring beim Aufschieben korrekt auf der Getriebewelle zentriert.

Die Erfindung wird nachfolgend anhand eines Ausführungsbeispiels mit Bezug auf die beigefügten Figuren näher beschrieben. In den Figuren zeigen:
- Figur 1 eine schematische Explosionsdarstellung einer Baugruppe einer erfindungsgemäßen elektromagnetisch betätigten Klauenkupplung, vor der Montage auf einer Getriebewelle mit einem erfindungsgemäßen Verfahren;
- Figuren 2 und 3 schematische, perspektivische, teilgeschnittene Darstellungen der Klauenkupplung aus Figur 1 in einer offenen und einer geschlossenen Stellung;
- Figuren 4 und 5 schematische Schnittansichten der Klauenkupplung aus Figur 1 in einer offenen und einer geschlossenen Stellung;
- Figur 6 eine schematische Seitenansicht der Klauenkupplung aus Figur 1;
- Figuren 7 und 8 schematische Schnittansichten der Klauenkupplung aus Figur 1 in einer offenen und einer geschlossenen Stellung;
- Figur 9 eine weitere schematische Schnittansicht der Klauenkupplung aus Figur 1 während der Montage der Schaltmuffe auf der Getriebewelle;
- Figuren 10 bis 12 schematische Schnittansichten verschiedener Varianten eines Stützrings der Klauenkupplung aus Figur 1; und
- Figuren 13 und 14 schematische Draufsichten auf verschiedene Varianten des Stützrings.

Aus Gründen der Übersichtlichkeit sind nicht immer alle identischen Komponenten mit Bezugszeichen versehen.

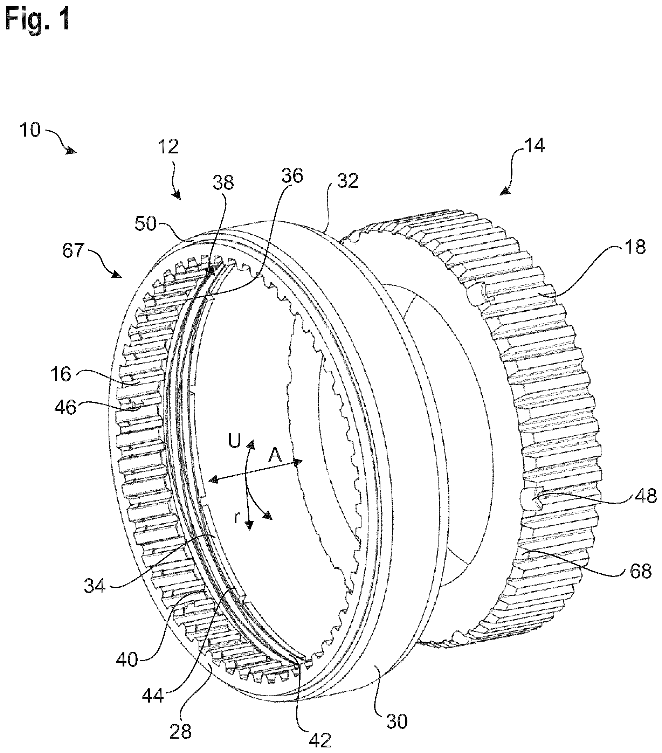

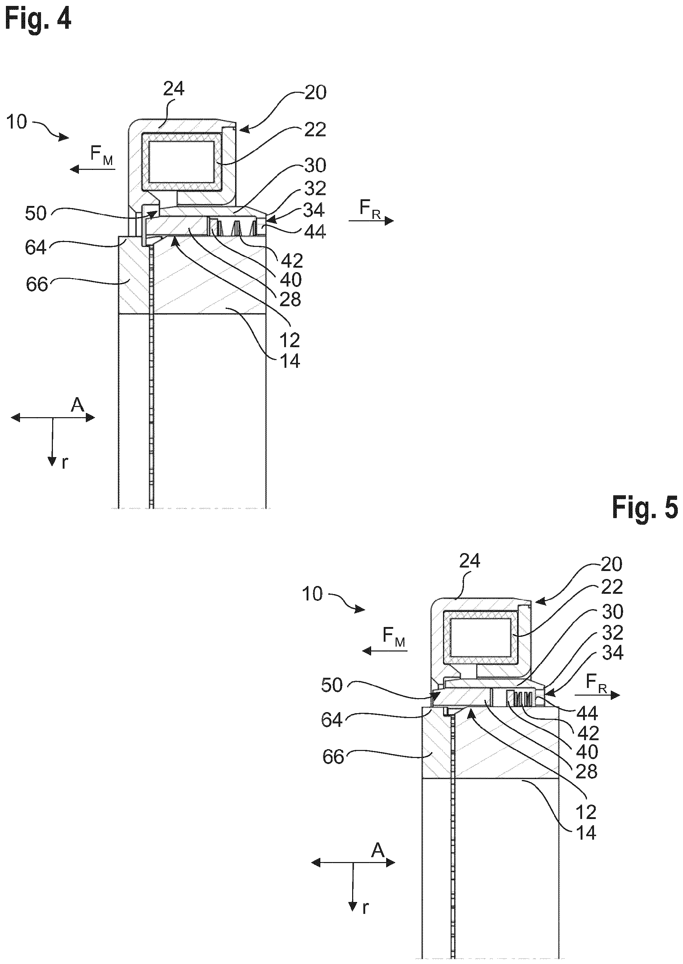

Die Figuren 1 bis 8 zeigen eine elektromagnetisch betätigte Klauenkupplung 10, die eine Schaltmuffe 12 umfasst, die in Axialrichtung A auf einer Getriebewelle 14 verschieblich, aber in Umfangsrichtung U der Getriebewelle 14 drehfest aufgenommen ist. Die Schaltmuffe 12 hat eine Innenverzahnung 16, während die Getriebewelle 14 mit einer passenden Außenverzahnung 18 versehen ist.

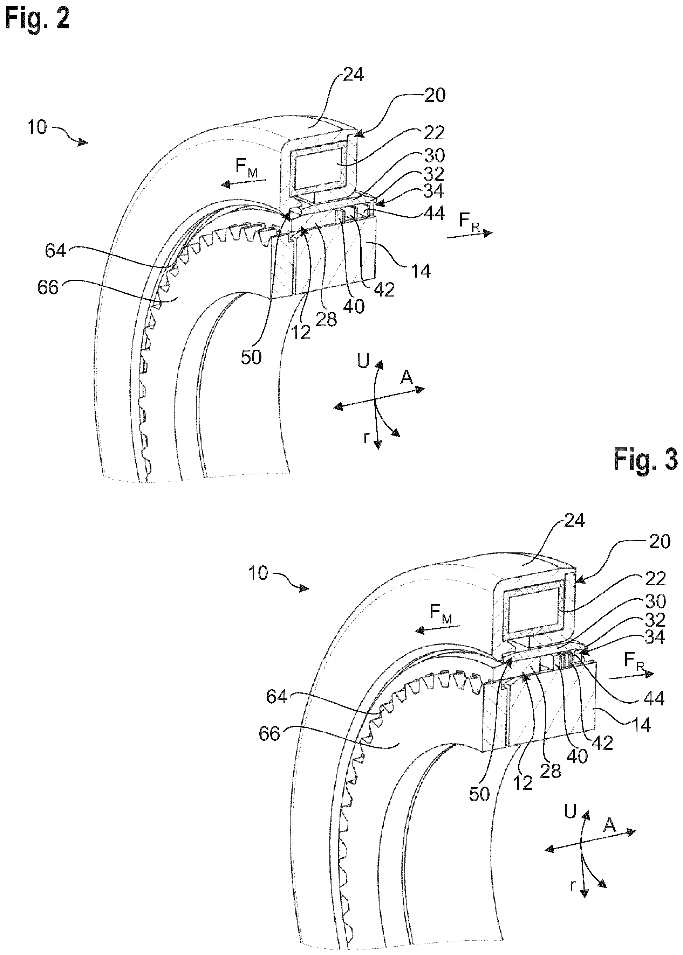

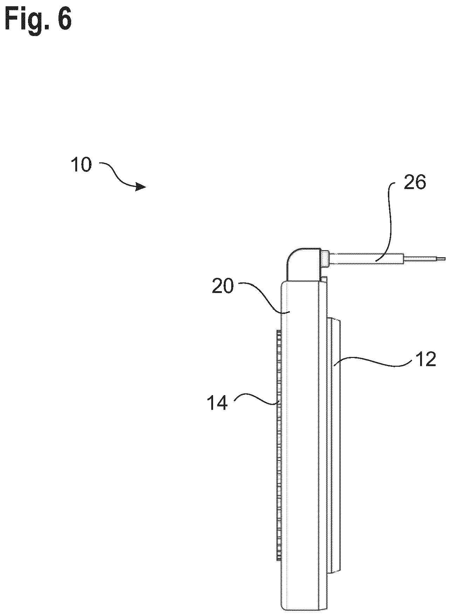

Wie in den Figuren 2 bis 6 zu erkennen ist, ist die Schaltmuffe 12 in Radialrichtung r von einem Aktor 20 umgeben, der eine bestrombare Magnetspule 22 sowie ein Aktorgehäuse 24 umfasst. Eine Stromzufuhr zur Magnetspule 22 erfolgt über geeignete elektrische Anschlüsse 26, wie in Figur 6 gezeigt ist.

Ist der Aktor 20 aktiviert, wirkt eine magnetische Kraft F_{M} auf die Schaltmuffe 12 und bewegt diese in eine erste Schaltstellung, die in diesem Beispiel einer geschlossenen Stellung der Klauenkupplung 10 entspricht. Diese erste Schaltstellung ist in den Figuren 3, 5 und 8 dargestellt.

Die Schaltmuffe 12 ist hier aus einem Eingriffsring 28 und einem radial außerhalb des Eingriffsrings 28 angeordneten, fest mit diesem verbundenen Schaltring 30 zusammengesetzt. Die Innenverzahnung 16 ist ausschließlich am Eingriffsring 28 vorhanden. Die radiale Innenseite des Schaltrings 30 ist glatt ausgeführt. Der Schaltring 30 hat an seinem dem Eingriffsring 28 abgewandten ersten axialen Ende 32 einen radialen Vorsprung 34, der sich in Richtung zur Getriebewelle 14 erstreckt.

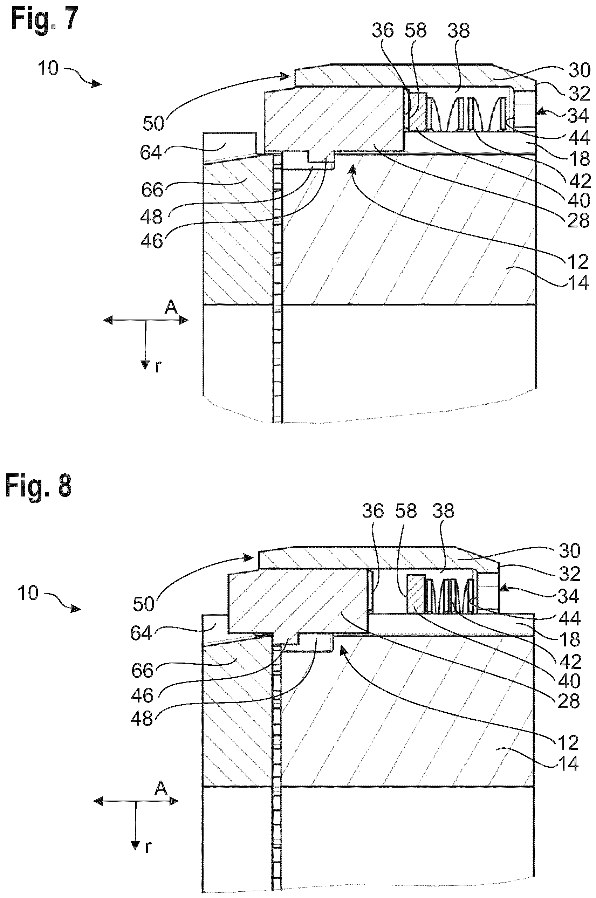

Zwischen dem radialen Vorsprung 34, der radialen Innenseite des Schaltrings 30 und einer Seitenfläche 36 des Eingriffsrings 28 ist eine Aufnahme 38 ausgebildet, in der ein Stützring 40 sowie ein Federelement 42 aufgenommen sind, die jeweils ringförmig gestaltet und auf die Getriebewelle 14 aufgeschoben sind (siehe z.B. Figuren 7 und 8).

Der Stützring 40 ist an einer vorgegebenen Endposition axial und optional auch in Umfangsrichtung U fest auf der Getriebewelle 14 fixiert.

Das Federelement 42 kann in Axialrichtung A durch die Bewegung der Schaltmuffe 12 zusammengedrückt werden und sich entspannen, um die Schaltmuffe 12 aus der ersten Schaltstellung axial in eine zweite Schaltstellung zurück zu bewegen. Die zweite Schaltstellung entspricht hier einer offenen Stellung der Klauenkupplung 10 und ist in den Figuren 2, 4 und 7 gezeigt.

Der radiale Vorsprung 34 bildet einen Axialanschlag 44 für das Federelement 42, der eine von dem Federelement 42 erzeugte Rückstellkraft F_{R} auf die Schaltmuffe 12 überträgt. An seiner dem Axialanschlag 44 entgegengesetzten Seite liegt das Federelement 42 an einer Seitenfläche des Stützrings 40 an, die einen zweiter Axialanschlag für das Federelement 42 bildet und die Reaktionskraft des Federelements 42 aufnimmt und in die Getriebewelle 14 ableitet.

An einigen Zähnen der Innenverzahnung 16 des Eingriffsrings 28 der Schaltmuffe 12 ist jeweils ein radialer Anschlagsvorsprung 46 ausgebildet, wobei die Anschlagsvorsprünge 46 so über den Umfang der Schaltmuffe 12 verteilt sind, dass sie mit Anschlagnuten 48 an der Außenverzahnung 18 der Getriebewelle 14 zusammenwirken (siehe Figuren 1, 7 und 8). Die axiale Tiefe der Anschlagnuten 48 sowie die axiale Position der Anschlagsvorsprünge 46 begrenzen die axiale Bewegung der Schaltmuffe 12 in Richtung zur zweiten Schaltstellung und definieren damit auch die axiale Position der zweiten Schaltstellung.

Die erste Schaltstellung ist hier durch eine Anlage der Anschlagvorsprünge 46 an einer Stirnfläche des Losrads 66 vorgegeben.

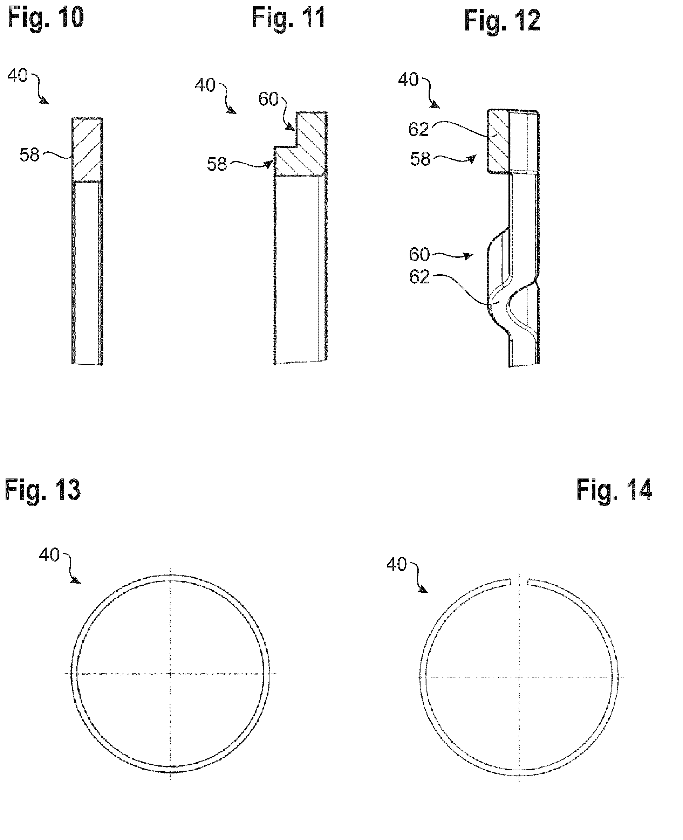

In der zweiten Schaltstellung ist die Schaltmuffe 12, genauer eine Seitenfläche 36 des Eingriffsrings 28, in Kontakt mit einer in Axialrichtung weisenden Anlagefläche 58 des Stützrings 40. Um adhäsive Kräfte zwischen diesen beiden Bauteilen zu verringern, die durch einen Ölfilm und/oder magnetische Kräfte zwischen der Seitenfläche 36 und der Anlagefläche 58 entstehen, kann die Anlagefläche 58 eine oder mehrere geometrische Strukturen 60 aufweisen, die den Kontakt zwischen der Anlagefläche 58 der Seitenfläche 36 so weit wie möglich verringern. Varianten hierzu sind in den Figuren 11 und 12 dargestellt, während Figur 10 einen einfachen flachen Stützring 40 zeigt.

Im Beispiel der Figur 11 ist die Anlagefläche 58 in einem Schnitt in Radialrichtung r entlang der Axialrichtung A L-förmig, sodass nur ein schmaler Ring in Kontakt mit der Seitenfläche 36 des Eingriffsring 58 kommt.

Im Beispiel der Figur 12 sind mehrere axiale Vorsprünge 62 bezüglich der Radialrichtung r und/oder der Umfangsrichtung U an unterschiedlichen Positionen der Anlagefläche 58 ausgebildet, wobei die Anlagefläche 58 nur im Bereich der Vorsprünge 62 in Kontakt mit der Seitenfläche 36 kommt.

Im Betrieb der elektromagnetischen Klauenkupplung 10 wird der Aktor 20 bestromt, wenn die Klauenkupplung 10 geschlossen werden soll. Durch das Magnetfeld der Magnetspule 22 entsteht eine Reluktanzkraft F_{M} im Schaltring 30, die diesen radial unter das Aktorgehäuse 24 zieht, um einen möglichst geschlossenen Magnetkreis zu bilden und die Gesamtinduktivität zu maximieren. Somit wird die Schaltmuffe 12 in Richtung der ersten Schaltstellung verschoben, bis die Schaltmuffe 12 die erste Schaltstellung erreicht hat.

In dieser Position hat sich die Innenverzahnung 16 des Eingriffsrings 28 der Schaltmuffe 12 axial so weit verschoben, dass sie in Eingriff mit einer Außenverzahnung 64 eines Losrads 66 kommt, das axial direkt anschließend an die Außenverzahnung 18 der Getriebewelle 14 angeordnet ist, und die Außenverzahnung 18 der Getriebewelle 14 mit der Außenverzahnung 64 des Losrad 66 koppelt, sodass die Getriebewelle 14 und das Losrad 66 drehfest miteinander verbunden sind.

Durch die Verschiebung der Schaltmuffe 12 wird das Federelement 42 zwischen dem Stützring 40 und dem Axialanschlag 44 am Vorsprung 34 des Schaltrings 30 komprimiert und baut die Rückstellkraft F_{R} auf.

Soll die Klauenkupplung 10 wieder geöffnet werden, so wird die Bestromung der Magnetspule 22 des Aktors 20 beendet. Die durch das Magnetfeld hervorgerufene Kraft F_{M} entfällt nun, und die Schaltmuffe 12 wird durch die vom Federelement 42 aufgebrachten Rückstellkraft F_{R} in Gegenrichtung axial in die zweite Schaltstellung zurück verschoben. Die axiale Verschiebung endet in der zweiten Schaltstellung, wenn die Anschlagsvorsprünge 46 am axialen Ende der Anschlagnuten 48 anliegen Dabei gerät die Innenverzahnung 16 des Eingriffsrings 28 wieder außer Eingriff mit der Außenverzahnung 64 des Losrads 66, sodass die Getriebewelle 14 und das Losrad 66 wieder voneinander entkoppelt sind.

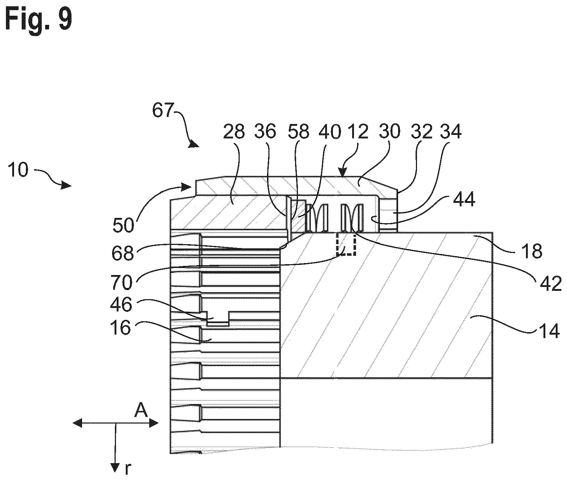

Zur Montage der Schaltmuffe 12 auf der Außenverzahnung 18 der Getriebewelle 14 wird zunächst eine Baugruppe 67 gebildet. Hierzu werden der Eingriffsring 28, der Stützring 40 und das Federelement 42 axial nebeneinander angeordnet. Der Schaltring 30 wird radial auf eine Außenseite des Eingriffsrings 28 aufgesetzt und dort fest fixiert, z.B. durch Schweißen. Somit ist zwischen der Seitenfläche 36 des Eingriffsrings 28 und dem radialen Vorsprung 34 des Schaltrings 30 die Aufnahme 38 gebildet und gleichzeitig der Stützring 40 und das Federelement 42 in der Aufnahme 38 aufgenommen (siehe Figuren 1 und 9).

Diese Baugruppe 67 wird jetzt als Ganzes in Axialrichtung A auf die Außenverzahnung 18 der Getriebewelle 14 aufgeschoben. Diese Bewegung wird durch eine Fase 68 am axialen Ende der Außenverzahnung 18 unterstützt (siehe Figuren 1 und 9). Die Fase 68 zentriert den Stützring 40 und weitet diesen radial auf, sodass er unter radialer Spannung auf die Außenverzahnung 18 aufgeschoben werden kann. Bei dieser Bewegung wird der Stützring 40 in Axialrichtung A durch die Seitenfläche 36 des Eingriffsrings 28 bewegt. Diese Verschiebung endet, wenn die Anschlagsvorsprünge 46 an der Innenverzahnung 16 des Eingriffsrings 28 am axialen Ende der jeweiligen Anschlagnuten 48 angelangt sind. Jetzt befindet sich der Stützring 40 in seiner vorgegebenen Endposition. Die vorgegebene Endposition ist aufgrund der so erfolgenden Montage exakt auf die Position der Schaltmuffe 12 am Ende des Schaltwegs in Richtung der zweiten Schaltstellung abgestimmt.

In einer ersten Variante, die in Figur 13 dargestellt ist, ist der Stützring 40 in Umfangsrichtung U geschlossen. In diesem Fall wird der Stützring 40 rein durch Reibungskräfte auf der Getriebewelle 14 fixiert. Die Montage kann z.B. durch Erwärmen der Bauteile unterstützt werden, wobei eine temporäre Ausdehnung des Stützrings 40 in Radialrichtung r hervorgerufen wird.

In einer zweiten Variante, die in Figur 14 dargestellt ist, ist der Stützring 40 in Umfangsrichtung U offen, also geschlitzt, was das Aufweiten des Stützrings 40 beim Aufschieben auf die Getriebewelle 14 vereinfacht. In diesem Fall weist die Außenverzahnung 18 der Getriebewelle 14 an der vorgegebenen Endposition des Stützrings 40 eine Radialnut 70 auf (angedeutet in Figur 9), in die der Stützring 40 einschnappt.

## Patentansprüche

1. Elektromagnetisch betätigte Klauenkupplung (10) mit einer Schaltmuffe (12) mit einer Innenverzahnung (16), wobei die Innenverzahnung (16) drehfest und axial verschieblich auf einer Außenverzahnung (18) einer Getriebewelle (14) aufgenommen ist, einem Aktor (20) mit einer Magnetspule (22), der so ausgelegt ist, dass er die Schaltmuffe (12) axial auf der Getriebewelle (14) in eine erste Schaltstellung verschieben kann, einem Federelement (42), das mit der Schaltmuffe (12) zusammenwirkt und die Schaltmuffe (12) entgegen einer durch den Aktor (20) hervorgerufenen Bewegung in Richtung einer zweiten Schaltstellung beaufschlagt, und einem Stützring (40), der auf die Getriebewelle (14) aufgesteckt und in einer Axialrichtung (A) der Schaltmuffe (12) zwischen dem Federelement (42) und der Innenverzahnung (16) der Schaltmuffe (12) angeordnet ist und der bezüglich der Axialrichtung (A) fest mit der Getriebewelle (14) verbunden ist, wobei die Schaltmuffe (12) einen Eingriffsring (28) aufweist, an dem die Innenverzahnung (16) ausgebildet ist, und einen fest mit dem Eingriffsring (28) verbundenen Schaltring (30), der mit dem Aktor (20) zusammenwirkt, wobei der Schaltring (30) radial außerhalb des Eingriffsrings (28) und der Stützring (40) axial neben dem Eingriffsring (28) angeordnet ist und die Schaltmuffe (12) eine Aufnahme (38) für den Stützring (40) und das Federelement (42) aufweist und **dadurch gekennzeichnet, dass** der Schaltring (30) sich axial über den Stützring (40) und das Federelement (42) erstreckt und einen seitlichen Axialanschlag (44) für das Federelement (42) aufweist.

2. Klauenkupplung (10) nach Anspruch 1, wobei die Innenverzahnung (16) der Schaltmuffe (12) mehrere radiale Anschlagsvorsprünge (46) aufweist, die jeweils mit einer Anschlagnut (48) in der Außenverzahnung (18) der Getriebewelle (14) zusammenwirken und die eine Endposition der Schaltmuffe (12) in der zweiten Stellung der Klauenkupplung (10) definieren.

3. Klauenkupplung (10) nach Anspruch 2, wobei die Anschlagsvorsprünge (46) in der ersten Schaltstellung in Kontakt mit einer Stirnseite eines Losrads (66) sind.

4. Klauenkupplung (10) nach einem der vorhergehenden Ansprüche, wobei der Stützring (40) eine Anlagefläche (58) für die Schaltmuffe (12) aufweist, an der geometrische Strukturen (60) ausgebildet sind, die einen Kontakt zwischen Schaltmuffe (12) und Stützring (40) reduzieren.

5. Verfahren zur Montage einer Schaltmuffe (12) einer elektromagnetisch betätigten Klauenkupplung (10) nach einem der vorhergehenden Ansprüche auf einer Getriebewelle (14), mit den Schritten:
- Bilden einer Baugruppe (67), indem der Stützring (40) und das Federelement (42) in der Aufnahme (38) an der Schaltmuffe (12) angeordnet werden, und
- Aufschieben der Baugruppe (67) auf die Außenverzahnung (18) der Getriebewelle (14) bis zu einer vorgegebenen Endposition des Stützrings (40), wobei der Stützring (40) an der vorgegebenen Endposition auf der Getriebewelle (14) axial fixiert wird.

6. Verfahren nach Anspruch 5, wobei der Stützring (40) ausschließlich durch Reibungskräfte an der Getriebewelle (14) in der vorgegebenen Endposition gehalten wird.

7. Verfahren nach Anspruch 5, wobei der Stützring (40) in der vorgegebenen Endposition in eine Radialnut (70) in der Außenverzahnung (18) der Getriebewelle (14) eingreift.

8. Verfahren nach einem der Ansprüche 5 bis 7, wobei der Stützring (40) auf eine Fase (68) an einem axialen Ende der Außenverzahnung (18) der Getriebewelle (14) aufgeschoben und dabei radial aufgeweitet wird.

## Claims

1. An electromagnetically actuated dog clutch (10) comprising a shifting sleeve (12) having an internal toothing (16), the internal toothing (16) being received axially movably on an external toothing (18) of a transmission shaft (14) for joint rotation therewith, an actuator (20) which has a magnet coil (22) and is configured so as to be adapted to move the shifting sleeve (12) axially on the transmission shaft (14) into a first shifting position, a spring element (42) which cooperates with the shifting sleeve (12) and acts upon the shifting sleeve (12) in a direction opposite to a movement caused by the actuator (20) in the direction of a second shifting position, and a support ring (40) which is plugged onto the transmission shaft (14) and is arranged in an axial direction (A) of the shifting sleeve (12) between the spring element (42) and the internal toothing (16) of the shifting sleeve (12) and which is firmly connected to the transmission shaft (14) with respect to the axial direction (A), wherein the shifting sleeve (12) has an engaging ring (28) on which the internal toothing (16) is formed, and a shift ring (30) which is firmly connected to the engaging ring (28) and cooperates with the actuator (20), wherein the shift ring (30) is arranged radially outside the engaging ring (28) and the support ring (40) is arranged axially next to the engaging ring (28), and the shifting sleeve (12) has a receptacle (38) for the support ring (40) and the spring element (42), and **characterized in that** the shift ring (30) extends axially over the support ring (40) and the spring element (42) and has a lateral axial stop (44) for the spring element (42).

2. The dog clutch (10) according to claim 1, wherein the internal toothing (16) of the shifting sleeve (12) has a plurality of radial stop projections (46) which each cooperate with a stop groove (48) in the external toothing (18) of the transmission shaft (14) and define an end position of the shifting sleeve (12) in the second position of the dog clutch (10).

3. The dog clutch (10) according to claim 2, wherein in the first shifting position, the stop projections (46) are in contact with an end face of an idler gear (66).

4. The dog clutch (10) according to any of the preceding claims, wherein the support ring (40) has a resting surface (58) for the shifting sleeve (12), on which geometric structures (60) are formed which reduce contact between the shifting sleeve (12) and the support ring (40).

5. A method of mounting a shifting sleeve (12) of an electromagnetically actuated dog clutch (10) according to any of the preceding claims on a transmission shaft (14), comprising the steps of:
- forming an assembly (67) by arranging the support ring (40) and the spring element (42) in the receptacle (38) on the shifting sleeve (12); and
- pushing the assembly (67) onto the external toothing (18) of the transmission shaft (14) up to a predetermined end position of the support ring (40), the support ring (40) being axially fixed on the transmission shaft (14) at the predetermined end position.

6. The method according to claim 5, wherein the support ring (40) is held in the predetermined end position on the transmission shaft (14) solely by frictional forces.

7. The method according to claim 5, wherein in the predetermined end position, the support ring (40) engages in a radial groove (70) in the external toothing (18) of the transmission shaft (14).

8. The method according to any of claims 5 to 7, wherein the support ring (40) is pushed onto a chamfer (68) at an axial end of the external toothing (18) of the transmission shaft (14) and is expanded radially in the process.

## Revendications

1. Embrayage à crabots (10) à commande électromagnétique, comprenant une douille de changement de vitesses (12) munie d'une denture intérieure (16), la denture intérieure (16) étant reçue de manière solidaire en rotation et déplaçable axialement sur une denture extérieure (18) d'un arbre de transmission (14), un actionneur (20) présentant une bobine magnétique (22) et réalisé de manière à déplacer la douille de changement de vitesses (12) axialement sur l'arbre de transmission (14) vers une première position de changement de vitesses, un élément à ressort (42) qui coopère avec la douille de changement de vitesses (12) et sollicite la douille de changement de vitesses (12) à l'encontre d'un mouvement provoqué par l'actionneur (20) en direction d'une deuxième position de changement de vitesses, et une bague de support (40) qui est emboîtée sur l'arbre de transmission (14) et est agencée dans un sens axial (A) de la douille de changement de vitesses (12) entre l'élément à ressort (42) et la denture intérieure (16) de la douille de changement de vitesses (12) et qui est solidaire de l'arbre de transmission (14) par rapport au sens axial (A), la douille de changement de vitesses (12) comportant une bague d'engrènement (28) sur laquelle est réalisée la denture intérieure (16), et une bague de changement de vitesses (30) qui est solidaire de la bague d'engrènement (28) et coopère avec l'actionneur (20), la bague de changement de vitesses (30) étant agencée radialement à l'extérieur de la bague d'engrènement (28), et la bague de support (40) étant agencée axialement à côté de la bague d'engrènement (28), et la douille de changement de vitesses (12) présentant un logement (38) pour la bague de support (40) et l'élément à ressort (42), et **caractérisé en ce que** la bague de changement de vitesses (30) s'étend axialement au-dessus de la bague de support (40) et l'élément à ressort (42) et présente une butée axiale latérale (44) pour l'élément à ressort (42).

2. Embrayage à crabots (10) selon la revendication 1, la denture intérieure (16) de la douille de changement de vitesses (12) présentant une pluralité de saillies de butée radiales (46) qui coopèrent chacune avec une rainure de butée (48) dans la denture extérieure (18) de l'arbre de transmission (14) et qui définissent une position finale de la douille de changement de vitesses (12) dans la deuxième position de l'embrayage à crabots (10).

3. Embrayage à crabots (10) selon la revendication 2, les saillies de butée (46) étant en contact avec une face frontale d'un pignon fou (66) dans la première position de changement de vitesses.

4. Embrayage à crabots (10) selon l'une des revendications précédentes, la bague de support (40) présentant une surface d'appui (58) pour la douille de changement de vitesses (12), sur laquelle sont réalisées des structures géométriques (60) qui réduisent un contact entre la douille de changement de vitesses (12) et la bague de support (40).

5. Procédé de montage d'une douille de changement de vitesses (12) d'un embrayage à crabots (10) à commande électromagnétique selon l'une des revendications précédentes sur un arbre de transmission (14), comprenant les étapes suivantes :
- la réalisation d'un ensemble (67) en agençant la bague de support (40) et l'élément à ressort (42) dans le logement (38) sur la douille de changement de vitesses (12), et
- l'emboîtement de l'ensemble (67) sur la denture extérieure (18) de l'arbre de transmission (14) jusqu'à une position finale prédéterminée de la bague de support (40), la bague de support (40) étant fixée axialement sur l'arbre de transmission (14) dans la position finale prédéterminée.

6. Procédé selon la revendication 5, la bague de support (40) étant maintenue dans la position finale prédéterminée sur l'arbre de transmission (14) uniquement par des forces de frottement.

7. Procédé selon la revendication 5, la bague de support (40), dans la position finale prédéterminée, s'engageant dans une rainure radiale (70) dans la denture extérieure (18) de l'arbre de transmission (14).

8. Procédé selon l'une des revendications 5 à 7, la bague de support (40) étant emboîtée sur un chanfrein (68) à une extrémité axiale de la denture extérieure (18) de l'arbre de transmission (14) et étant ainsi élargie radialement.
